(19) Europäisches Patentamt
European Patent Office
Office européen des brevets

(11) Publication number: **0 582 349 A1**

(12) # EUROPEAN PATENT APPLICATION

(21) Application number: **93202274.2**

(22) Date of filing: **31.07.93**

(51) Int. Cl.[5]: **C08L 25/02**, C08L 53/02, //(C08L25/02,53:02),(C08L53/02, 25:02)

(30) Priority: **05.08.92 IT MI921929**

(43) Date of publication of application: **09.02.94 Bulletin 94/06**

(84) Designated Contracting States: **AT BE CH DE DK ES FR GB IE IT LI LU NL SE**

(71) Applicant: **ENICHEM S.p.A.**
**Piazza della Repubblica, 16**
**I-20124 Milano(IT)**

(72) Inventor: **Ghidoni, Dario**
**Via XXV Aprile, I-46023**
**Gonzaga (Mantova)(IT)**
Inventor: **Callaioli, Andrea**
**Via Gaudolfo 1**
**I-46100 Mantova(IT)**
Inventor: **Fasulo, Gian Claudio**
**Via Puccini, 11**
**I-46010 San Silvestro (Mantova)(IT)**
Inventor: **Romagnoli, Giuseppe**
**Via F. Filzi, 24**
**I-46017 Rivarolo Mantovano (Mantova)(IT)**

(74) Representative: **De Carli, Erberto**
**ING. BARZANO' & ZANARDO MILANO S.p.A.**
**Via Borgonuovo, 10**
**I-20121 Milano (IT)**

(54) **Thermoplastic, high impact moulding material.**

(57) Thermoplastic, impact resistant moulding material comprising a polymodal, either linear or radial block polymer consisting of vinyl aromatic monomer/conjugated diene blocks and a high impact aromatic vinyl polymer containing a dispersed dienic rubber in the form of particles having a cellular structure and an average chord of at least 1.2 micrometres.

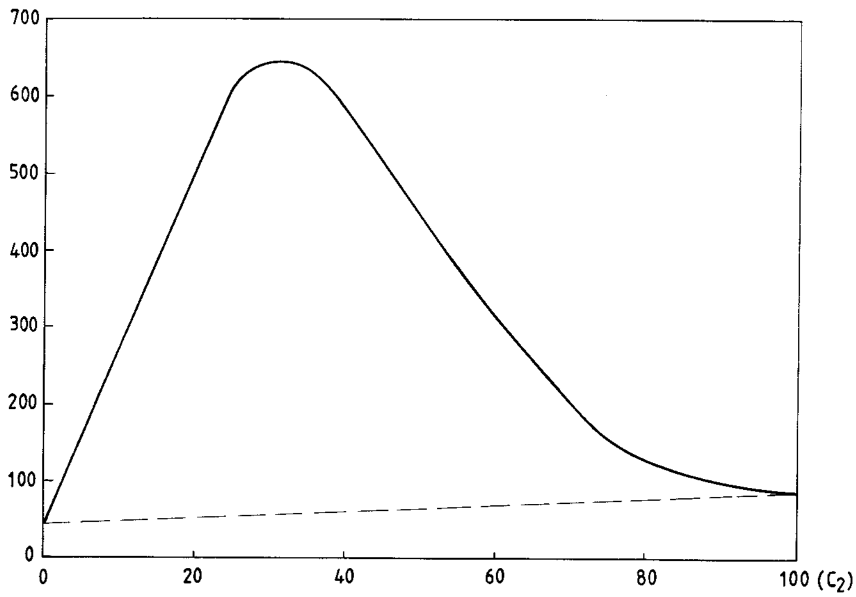


EP 0 582 349 A1

The present invention relates to a thermoplastic high impact moulding material.

In greater detail, the present invention relates to a thermoplastic, impact resistant moulding material based on an either radial or linear block copolymer consisting of vinyl aromatic monomer/conjugated diene blocks and displaying an extremely good combination of physical-mechanical properties, in particular impact strength, and gloss.

The radial or linear block copolymers consisting of vinyl aromatic monomer/conjugated diene blocks are thermoplastic resins suitable for being fabricated in order to yield shaped bodies by means of injection moulding or extrusion processes. The formed bodies obtained from said copolymers are characterized by a high gloss.

Very often and for some specific applications, these block copolymers should desirably display high gloss combined with very good physical properties of toughness and impact strength. In detail, very often the preparation is required of products based on vinyl aromatic polymers and/or copolymers having a gloss of at least 50% at 60° under the various moulding conditions, and an (IZOD) resilience which is at least 7-8 times as high as of pure polystyrene.

The several attempts made heretofore in order to obtain products of vinyl aromatic polymers and/or copolymers having such an optimal property combination were not successful. In fact, German patent No. 2,613,352 discloses a process for preparing a high impact polystyrene (HIPS), which allegedly should display improved gloss and mechanical properties substantially corresponding to those of the high impact polymers prepared according to conventional techniques.

The polystyrene prepared by means of the process according to this German patent comprises dispersed rubber particles having an average diameter shorter than one micrometre and preferably comprised within the range of from 0.2 to 0.6 micrometre. The high impact polystyrene obtained in the examples of this patent shows very good physical properties of mechanical strength, such as an impact strength which is from 10 to 15 times as high as of conventional polystyrene, but its gloss is not completely satisfactory.

On the contrary, European patent application published with publication No. 69,792 discloses styrene containing polymers which are clear and impact resistant, and are obtained by dispersing throughout the polymeric matrix a styrene-diene block copolymer in the form of small rods or spheres of 0.07 micrometre of diameter or even smaller. Although these polymers display an excepionally good clearness, their physical properties and, in particular, their impact strength, are not high enough in order to enable the polymer to be used in a large number of applications in which such a whole of properties is required.

According to U.S. patent Nos. 4,153,645 and 4,146,589, styrenic polymers reinforced with high impact rubber can be obtained by dispersing said rubber throughout the continuous polymeric matrix, as particles of two different sizes, i.e., showing a bimodal distribution of particle sizes. In general, these products display physical properties, in particular impact strength, which are higher than of a rubber reinforced product in which the dispersed rubber phase has a monomodal distribution of particle sizes. Unfortunately, the increase in physical properties takes place at the expense of gloss.

U.S. patent No. 4,493,922 discloses a thermoplastic, high impact moulding material which is constituted by a polystyrene polymeric matrix, and, uniformely dispersed throughout it, a rubber phase constituted by two elastomeric polymers or copolymers essentially composed by butadiene and containing particles with two different average sizes and morphological characteristics.

In particular, the rubber phase is constituted by: 60-95% by weight of polybutadiene in the form of particles having an average diameter of 0.2-0.6 micrometre and a capsule-like morphology, and 40-5% by weight of polybutadiene in the form of particles having an average diameter of 2-8 micrometres and a cellular morphology. These thermoplastic materials are obtained by blending said high impact styrene polymers, each of which contains, dispersed, one from said polybutadiene kinds. In the examples reported in this U.S. patent, the thermoplastic material obtained displays impact strength values of 13.4-17.2 $kJ/m^2$ and values of gloss of 60-68%, as measured by Dr. Lange's Multiflex galvanometer.

British patent No. 1,438,262 discloses thermoplastic moulding compositions comprising (i) a high impact copolymer obtained by polymerizing a vinyl aromatic monomer in the presence of a rubber, and (ii) from 0.5 to 25% by weight of a radial block copolymer constituted by conjugated diene/vinyl aromatic monomer blocks, with said block copolymer being constituted by at least 3 arms, each of which comprises a segment of a dienic polymer with a segment of a vinyl aromatic polymer at an end, with the other end being coupled with similar arms.

U.S. patent No. 4,195,136 discloses polymeric compositions comprising: an high impact styrene resin and a mixture of two block copolymers consisting of vinyl aromatic monomer/conjugated diene blocks, with a content of vinyl aromatic monomer of 55-85% by weight. The block copolymers used in the blend have the general formula: $S\text{-}(B\text{-}S)_n$, $(S\text{-}B)_n$ or $A\text{-}S\text{-}(B\text{-}S)_n$, in which S represents a block mainly composed by vinyl

aromatic monomer, B represents a block mainly composed of conjugated diene and n is an integer of at least 1. In the blend, said two block copolymers differ from each other owing to their contents of vinyl aromatic monomer which is at least 5% (by weight) higher in one of said two block copolymers. However, also these compositions do not display good physical-mechanical properties; in fact, in the examples the (IZOD) resilience values are very low.

The purpose of the present invention is of overcoming this drawback displayed by the prior art.

In particular, the purpose of the present invention is of preparing a thermoplastic, high impact moulding material based on a vinyl aromatic polymer having a gloss of at least 50% at 60°, while simultaneously showing high enough physical-mechanical properties and, in particular, a very good (IZOD) resilience.

According to a general aspect of the present invention, a thermoplastic high impact moulding material based ob a vinyl aromatic polymer having the above said physical properties and gloss values can be obtained by blending a radial or polymodal linear block polymer consisting of vinyl aromatic monomer/conjugated diene blocks, with a high impact vinyl aromatic polymer containing, dispersed throughout it, a diene rubber in the form of particles having a cellular structure and an average chord of at least 1.2 micrometres.

Therefore, the object of the present invention is a thermoplastic high impact moulding material comprising:

($C_1$) from 10 to 95% by weight of a polymodal block polymer consisting of vinyl aromatic monomer/conjugated diene blocks, with a content of vinyl aromatic monomer comprised within the range of from 55 to 85% by weight, and

($C_2$) from 90 to 5% by weight of a high impact vinyl aromatic polymer containing, dispersed throughout it, from 5 to 15% by weight, relatively to the weight of the polymer, of a diene rubber in the form of particles having a cellular structure and an average chord of at least 1.2 micrometres.

In the thermoplastic, high impact moulding material according to the present invention, the best characteristics and combination of characteristics are obtained when the content of polymodal block polymer ($C_1$) is comprised within the range of from 30 to 90% by weight, and, correspondingly, the content of high impact vinyl aromatic polymer ($C_2$) is comprised within the range of from 70 to 10% by weight.

Surprisingly, the thermoplastic, high impact moulding material according to the present invention displays physical-mechanical properties which are far better than as expected or foreseeable if one just takes into consideration its starting components ($C_1$) and ($C_2$). In particular, the values of IZOD resilience of the thermoplastic high impact material according to the present invention are far higher than as obtainable from the linear combination of the IZOD resilience values of the components ($C_1$) and ($C_2$).

In the accompanying figure, the values of IZOD resilience are reported on a chart as a function of the composition of the thermoplastic, high impact material according to the present invention. In the figure, the percent content, by weight, of component ($C_2$) is reported on the abscissa, and the resilience values are reported on the ordinate. As one may observe, the obtained IZOD values (curved line) are higher than as expected from a direct linear relationship (rectilinear line). The curve displays a maximum when the level of high impact vinyl aromatic polymer ($C_2$) is comprised within the range of from 15 to 50% by weight relatively to the total weight of ($C_1$) + ($C_2$). Therefore, a particularly preferred thermoplastic high impact material according to the present invention is a material containing from 50 to 85% by weight of polymodal block copolymer ($C_1$) and, correspondingly, from 50 to 15% by weight of high impact vinyl aromatic polymer ($C_2$).

The term "polymodal block polymers", as used in the instant disclosure and in the appended claims, encompasses the polymeric products containing at least two blocks with different molecular weights, prevailingly constituted by a vinyl aromatic monomer and at least one block prevailingly constituted by a conjugated diene.

These polymodal block copolymers can be of either linear or radial type.

The polymodal linear block polymers can be represented by one of the following general formulas (I) and (II):

(I) $S_1$-B-$S_2$;

(II) $B_1$-$S_1$-$B_2$-$S_2$;

in which: $S_1$ and $S_2$ are non-elastomeric polymeric blocks of a vinyl aromatic monomer having different molecular weights; and B, $B_1$ and $B_2$ are elastomeric polymeric blocks based on a conjugated diene, and may have either the same or different molecular weights. These polymodal linear block- polymers are already known from technical literature and are disclosed, e.g., in U.S. patent No. 3,265,765, the contents of

which are incorporated thereto by reference, in their entirety.

In these polymodal linear block polymers, the non-elastomeric polymeric blocks have a molecular weight comprised within the range of from 5000 to 250,000 and the elastomeric blocks have a molecular weight comprised within the range of from 2000 to 250,000.

Between the polymeric blocks $S_1$, $S_2$ and B, $B_1$ and $B_2$ "random" and/or "tapered" sections may be present. In the "tapered" configuration, the transition between blocks B, $B_1$ and $B_2$ and blocks $S_1$ and $S_2$ can be gradual, in the sense that the proportion of the vinyl aromatic monomer in the dienic polymer progressively increases in the direction towards the non-elastomeric polymeric block, with simultaneously the proportion of conjugated diene progressively decreasing. In the "random" configuration, the vinyl aromatic and conjugated diene monomers follow each other in a random fashion. The molecular weights of "random" and/or "tapered" sections are preferably comprised within the range of from 500 to 50,000.

These polymodal linear block copolymers can be prepared according to well known techniques for those skilled in the art, such as, e.g., by first forming a block of vinyl aromatic polymer, by means of anionic polymerization, in an inert solvent and in the presence of a lithium-based organometallic catalyst (initiator), then producing the conjugated diene polymer block by means of the addition of such a monomer, and subsequently, by adding a vinyl aromatic monomer, forming a further block of vinyl aromatic polymer.

The preparation of the polymodal linear block polymers is carried out in an inert hydrocarbon solvent, such as pentane, hexane, benzene, cyclohexane, and so forth, at a temperature comprised within the range of from 40° to 120°C, in the presence of catalytic amounts of a lithium-alkyl, cycloalkyl or aryl compound, such as, e.g., methyl-lithium, n-butyl-lithium, sec-butyl-lithium, cyclohexyl-lithium, phenyl-lithium, and so forth.

The polymodal linear block polymers are available from the market, such as, e.g., the product marketed under the tradename "FINACLEAR(R) 520", manufactured and traded by the Company Fina.

Also the polymodal radial block polymer is of known type and available from the market. Such a polymodal radial block polymer can be of the types:

(III) $(S_1\text{-}S_2\text{-}B_1)_n$ - X - $(B_1$ - $S_2)_m$;

(IV) $(S_1\text{-}S_2/B_1\text{-}B_2)_m$ - X -$(B_2\text{-}B_1/S_2)_n$;

(V) $(S_1\text{-}S_2\text{-}B_1/S_3\text{-}B_2)_m$ - X - $(B_2\text{-}S_3/B_1\text{-}S_2)_n$;

(VI) $(S_1\text{-}B_1$ -> $S_2)_n$ - X -$(S_2$ <- $B_1)_m$;

(VII) $(S_3\text{-}S_4\text{-}B_2$ -> $S_5)_n$ - X -$(S_5$ <- $B_2\text{-}S_4)_m$;

(VIII) 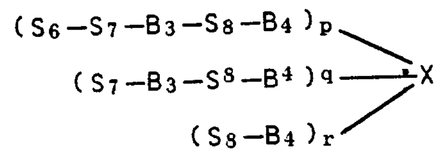

in which:

$S_1$, $S_2$, $S_3$, $S_4$, $S_5$, $S_6$, $S_7$ and $S_8$ are non-elastomeric polymeric blocks from a vinyl aromatic monomer, each of which has a different molecular weight, so that they will yield bimodal, trimodal or, in general, polymodal products; $B_1$, $B_2$, $B_3$ and $B_4$ are polymeric elastomeric blocks based on a conjugated diene, having a molecular weight which may be the same, or different from each other; X is the radical of a polyfunctional coupling agent by means of which the block copolymers which constitute the arms are covalently coupled with one another; m and n are integers, with m being higher than n, and with the value of their sum, which corresponds to the functionality of the radical X, being larger than 3, generally comprised within the range of from 3 to 10, and preferably of from 3 to 4; and p, q and r are integers, whose sum value, which corresponds to the functionality of radical X, is larger than 3, and generally is comprised within the range of from 3 to 10 and preferably of from 3 to 4; and $S_2/B_1$, $B_1/S_2$, $B_1/S_3$ and $S_3/B_1$ are blocks of copolymers of "random" and/or "tapered" type of vinyl aromatic monomer and conjugated diene.

The symbol "->" in formulas (VI) and (VII) means that the transition between the polymeric blocks takes place gradually ("tapered" configuration), rather than sharply, in the sense that the proportion of the vinyl

aromatic monomer in the dienic polymer progressively increases in the direction towards the polymeric, non-elastomeric block, while the proportion of the conjugated diene progressively decreases.

The coupling agent "X" is well known from technical literature and is disclosed, e.g. , in British patent No. 985,614. Typical examples of coupling agents are polyepoxides, such as, e.g., epoxidized polybutadiene; epoxidized linseed oil; polyesters, such as diethyl adipate; polyhalides, such as silicon tetrachloride; polyisocyanates such as benzene 1,2,4-triisocyanate; polyimines; polyaldehydes; polyketones, such as 1,3,6-hexanetrione; polyanhydride, such as pyromellitic dianhydride; polyacid halides, such as mellitic acid chloride; poly(vinyl aromatic) compounds as disclosed in U.S. patent No. 3,280,084.

These polymodal radial block polymers are prepared by means of well known techniques by first forming the linear block polymer containing active lithium atoms at a chain end, as disclosed hereinabove for polymodal linear block polymers, and subsequently adding the coupling agent containing at least three functional moieties capable of reacting with lithium-carbon linkages, so as to hook the carbon atom chain onto the functional moiety.

In these polymodal radial block polymers, the non-elastomeric polymeric blocks have a molecular weight comprised within the range of from 5000 to 250,000, the elastomeric polymeric blocks have a molecular weight comprised within the range of from 5000 to 50,000, the blocks of copolymers of "random" and/or "tapered" types have a molecular weight comprised within the range of from 500 to 50,000 and the blocks $B_1$ -> $S_2$ and $B_2$ -> $S_5$ preferably have a molecular weight comprised within the range of from 10,000 to 100,000.

These polymodal radial block polymers are well known from technical literature; so, e.g., the polymers of formula (III) are disclosed in U.S. patent No. 4,403,074; the polymers with formula (IV) are disclosed in U.S. patent No. 4,221,884; those with formula (V) are disclosed in European patent application published with No. 0,255,001; U.S. patent Nos. 4,086,298 and 4,167,545 disclose the polymers with formula (VI) and (VII) and EPO patent No. 0,153,727 discloses the polymers of formula (VIII).

The polymodal radial block polymers are available from the market from several manufacturers such as, e.g., from BASF under their tradename STYROLUX$^{(R)}$, or from Phillips Petroleum under their tradename K-RESIN$^{(R)}$.

The useful conjugated diene for preparing the polymodal either linear or radial polymers ($C_1$) are those which contain from 4 to 8 carbon atoms in their molecule such as, e.g., 1,3-butadiene, isoprene, 2,3-dimethyl-1,3-butadiene, piperylene, and mixtures thereof.

1,3-Butadiene is particularly preferred.

The high impact vinyl aromatic polymer ($C_2$) of the thermoplastic moulding material of the present invention can be prepared by means of any conventional techniques for producing cross linked high impact polymers, such as, e.g., by bulk polymerization, solution polymerization, suspension polymerization, emulsion polymerization and bulk-suspension polymerization. These polymers are produced from a vinyl aromatic monomer and a dienic rubber.

The conventional technique consists in dissolving the dienic rubber into the vinyl aromatic monomer and then submitting the mixture to polymerization in the presence of a catalyst in order to produce a vinyl aromatic polymer containing the grafting-copolymerized dienic rubber.

The size of the particles of the rubber phase is controlled by means of the amount of grafted phase, the revolution speed (revolutions per minute) of the stirrer of the reactor inside which the phase reversal takes place and/or by adjusting the amount of the chain transfer agent, as well known to those skilled in the art (see: G. F. Freeguard, British Pol. J. 1974, 6, pages 205-228; and A. Echte, Rubber Toughened Plastics 1989, pages 15-63, American Chemical Society Ed.).

The average diameter of the particles is the $d_{50}$ of the cumulative mass distribution. It is determined according to well-known methods for those skilled in the art, by measuring the particles under the electronic transmission microscope, as disclosed in F. Lenz Mikroskopie 63 (1956) 50-56.

The average chord of the particles of the dienic rubber may vary from 1.2 to 15, preferably from 1.5 to 10 micrometres.

The dienic rubber incorporated inside the vinyl aromatic polymer ($C_2$) in order to turn it into a high impact material may be an either natural or synthetic rubber. Suitable synthetic dienic rubbers are those which are constituted by a polymer of a conjugated diene containing from 4 to 6 carbon atoms and, in particular, polybutadiene, high- and medium-cis, low viscosity polybutadiene, polyisoprene, butadiene and/or isoprene copolymers with styrene or with other monomers containing more than 50% by weight of butadiene or isoprene. The amount of dienic rubber incorporated inside the polymer is comprised within the range of from 5 to 15%, preferably fo from 7 to 12% by weight.

The expression "vinyl aromatic monomer", as used in the present disclosure and in the appended claims, relates in general to all those monomers having the general formula (IX):

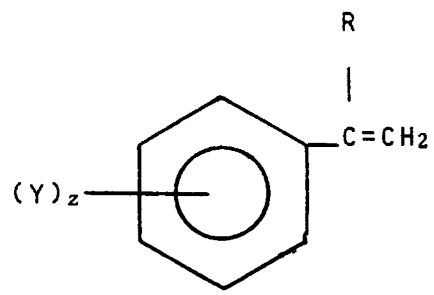

(IX)

in which:

R represents hydrogen or $C_1$-$C_4$ alkyl;

Y represents hydrogen, an alogen or $C_1$-$C_4$ alkyl;

z is zero or an integer comprised within the range of from 1 to 5.

Examples of vinyl aromatic monomers having the above general formula (IX) are: styrene, methyl styrene, mono-, di-, tri-, tetra- and pentachloro-styrene, and the corresponding alpha-methyl styrenes, ring-alkylated styrenes and their corresponding alpha-methyl styrenes, such as ortho- and para-methyl styrenes, ortho- and para-ethyl styrenes, ortho- and para-methyl-alpha-methyl styrenes, and so forth. These monomers can be used as single species, or as mixtures thereof or with other copolymerizable comonomers such as, e.g. maleic anhydride, acrylonitrile, methacrylonitrile, alkyl esters of (meth)acrylic acid.

Particularly preferred is styrene.

The thermoplastic high impact material according to the present invention can be prepared by first mixing the components ($C_1$) and ($C_2$) at room temperature, in any known blending unit. The mixture is subsequently extruded through single-screw or twin-screw extruders, Banbury blender, heating rollers, and so forth, at a temperature which is preferably comprised within the range of from 150 °C to 250 °C.

The compositions may contain small amounts, generally of from 0.1 to 3% by weight, of a stabilizer agent, or other intimately incorporated additives.

Plasticizers, lubricants, flame retardants, antistatic agents, dyes, pigments, fluxing agents, foaming agents, other inorganic fillers, and so forth, may be added in amounts comprised within the range of from 0.1 to 30% by weight, during the blending step, in order to supply the material with particular characteristics.

The material according to the present invention is easily processable and displays a whole of properties which make it suitable for use to prepare finished articles having high resilience together with high gloss characteristics. Therefore, said material finds applications in the sectors of household appliances, of electronics, and technical articles in general as films, sheets, strips, tapes, rods, boxes, cups, containers, and so forth. The material can be used for producing foamed articles, by using the known techniques in the art.

In order to better understand the present invention and to practice it, some illustrative, non-limitative examples are reported in the following.

In the examples, all parts and percentages are by weight, unless differently stated.

In the examples, in order to measure the characteristics of the compounds of the present invention, the following methods were used:

Mechanical properties

The notched IZOD resilience values at 23 °C were determined according to ASTM D 256 on specimens of 3.2 mm of thickness x 12.7 mm; and the yield strength, the tensile strength, the elongation at breakage and the elastic modulus were determined according to ASTM D 638.

Rheological properties

The Melt Index (M.F.I.) was determined according to ASTM D 1238, at 200 °C and under a 5-kg load.

Optical properties

The gloss was determined according to ASTM D 523 at 60° with a Glossgard instrument on three-steps rectangular plates of 175x75 mm of size, obtained by side injection into the centre of the longest side.

Said specimens have a planar face and their other face is subdivided into three steps with decreasing thickness respectively from 4.3 to 1.7 mm. The measurement is carried out on the face of the central step, corresponding to the thickness of 3 mm.

Examples 1-5

Inside a blender of tumbler type, the following were blended at room temperature:

-- a polymodal radial styrene-butadiene block polymer ($C_1$), having the above reported structure (VII), comprising 20-21% by weight of butadiene and 79-80% by weight of styrene and containing silicon as the coupling radical, a polymer marketed by the Company BASF under their tradename STYROLUX(R) 684 D, in such amounts as reported in Table 1; and

-- a high impact polystyrene (HIPS) ($C_2$) containing 10.5% by weight of polybutaniedic rubber in the form of particles having an average size of 2.5-3.0 micrometres (as determined by transmission microscopy), produced by the present Applicant, in the amounts as reported in Table 1.

The resulting compound was dried at 80°C for 4 hours and was extruded by means of BANDERA single-screw extruder model TR 45, with a length/diameter ratio of 25, with venting openings, at the temperature of 220°C.

By cutting the extruder leaving noodles, pellets were obtained which were dried for 4 hours at 80°C.

For the determination of the characteristics, the pellets are injection-moulded at a temperature of 200-220°C on a NEGRI & BOSSI press model V-17-110 FA in order to obtain specimes having such sizes as required by the standards.

The properties measured on the resulting specimens ar reported in following Table 1.

Table 1

| | | Examples | | | | |
|---|---|---|---|---|---|---|
| Components | | 1* | 2 | 3 | 4 | 5* |
| - STYROLUX(R) 684 D ($C_1$) (% by weight) | | 100 | 75 | 50 | 25 | ---- |
| - HIPS ($C_2$) (% by weight) | | ---- | 25 | 50 | 75 | 10 |
| PROPERTIES | | | | | | |
| IZOD 3.2 mm | (J/m) | 28 | 500 | 190 | 130 | 90 |
| IZOD 12.7 mm | (J/m) | 25 | 300 | 180 | 120 | 80 |
| Yield strength | ($N/mm^2$) | 20 | 21 | 22 | 22 | 17 |
| Tensile strength | ($N/mm^2$) | 18 | 19 | 20 | 20 | 20 |
| Elongation at breakage | (%) | 200 | 150 | 110 | 75 | 50 |
| Modulus | ($N/mm^2$) | 1500 | 1500 | 1480 | 1460 | 1300 |
| M.F.I. | (g/10 min) | 14 | 7 | 6 | 5.5 | 3 |
| Gloss 60° | (%) | (1) | 90 | 80 | 55 | 5 |

* Comparison Examples

(1) Clear

Example 6-9

The operating modalities of Example 1 were repeated with STYROLUX(R) 684 D being replaced by STYROLUX(R) 2686, in such amounts as reported in following Table 2. This product, marketed by the Company BASF, is a polymodal radial styrene-butadiene block polymer containing about 26% by weight of butadiene and about 74% by weight of styrene and silicon as the coupling agent.

The properties of the resulting compounds are reported in following Table 2:

Table 2

| Components | | Examples 6* | 7 | 8 | 9 |
|---|---|---|---|---|---|
| - STYROLUX(R) 2686 ($C_1$) (% by weight) | | 100 | 75 | 50 | 25 |
| - HIPS ($C_2$) (% by weight) | | ---- | 25 | 50 | 75 |
| PROPERTIES | | | | | |
| IZOD 3.2 mm | (J/m) | 32 | 610 | 450 | 150 |
| IZOD 12.7 mm | (J/m) | 27 | 450 | 400 | 140 |
| Yield strength | ($N/mm^2$) | 13 | 15 | 17 | 18 |
| Tensile strength | ($N/mm^2$) | 14 | 16 | 18 | 20 |
| Elongation at breakage | (%) | 250 | 240 | 140 | 80 |
| Modulus | ($N/mm^2$) | 1000 | 1100 | 1200 | 1300 |
| M.F.I. | (g/10 min) | 12 | 6.5 | 5.5 | 4.8 |
| Gloss 60° | (%) | (1) | 89 | 78 | 53 |

* Comparison Examples

(1) Clear

Examples 10-13

The operating modalities of Example 1 were repeated, with STIROLUX(R) 684 D being replaced by FINCLEAR(R) 520, in such amounts as reported in following Table 3. FINCLEAR(R) 520 is a polymodal linear styrene-butadiene block polymer having the above reported structure (I), containing a "tapered" block between B and $S_2$, and containing 74% by weight of styrene and 26% by weight of butadiene.

The characteristics of the resulting compounds are reported in following Table 3:

Table 3

| Components | | Examples 10* | 11 | 12 | 13 |
|---|---|---|---|---|---|
| - FINCLEAR(R) 520 ($C_1$) (% by weight) | | 100 | 75 | 50 | 25 |
| - HIPS ($C_2$) (% by weight) | | ---- | 25 | 50 | 75 |
| PROPERTIES | | | | | |
| IZOD 3.2 mm | (J/m) | 33 | 650 | 300 | 130 |
| IZOD 12.7 mm | (J/m) | 25 | 350 | 200 | 120 |
| Yield strength | ($N/mm^2$) | 22 | 19 | 18 | 18 |
| Tensile strength | ($N/mm^2$) | 14 | 16 | 19 | 20 |
| Elongation at breakage | (%) | 300 | 300 | 155 | 75 |
| Modulus | ($N/mm^2$) | 1100 | 1130 | 1200 | 1300 |
| M.F.I. | (g/10 min) | 9 | 6 | 4.5 | 3.7 |
| Gloss 60° | (%) | (1) | 88 | 77 | 52 |

* Comparison Example

(1) Clear

## Claims

1. Thermoplastic high impact moulding material having an extremely good combination of physical-mechanical and gloss properties, comprising:
   ($C_1$) from 10 to 95% by weight of a polymodal block polymer consisting of vinyl aromatic monomer/conjugated diene blocks, with a content of a vinyl aromatic monomer comprised within the range of from 55 to 85% by weight, and
   ($C_2$) from 90 to 5% by weight of a high impact vinyl aromatic polymer containing, dispersed throughout it, from 5 to 15% by weight, relatively to the weight of the polymer, of a diene rubber in the form of particles having a cellular structure and an average chord of at least 1.2 micrometres.

2. Thermoplastic high impact moulding material according to claim 1, in which the content of polymodal block polymer ($C_1$) is comprised within the range of from 30 to 90% by weight, and, correspondingly, the content of high impact vinyl aromatic polymer ($C_2$) is comprised within the range of from 70 to 10% by weight.

3. Thermoplastic high impact moulding material according to claim 1 or 2, in which the content of polymodal block polymer ($C_1$) is comprised within the range of from 50 to 85% by weight, and, correspondingly, the content of high impact vinyl aromatic polymer ($C_2$) is comprised within the range of from 50 to 15% by weight, relatively to the total weight of ($C_1$) + ($C_2$).

4. Thermoplastic high impact moulding material according to any of the preceding claims, in which the polymodal block polymer ($C_1$) is of either linear type or radial type.

5. Thermoplastic, high impact moulding material according to any of the preceding claims, in which the polymodal block polymer ($C_1$) is of linear type and is selected from those having the general formulas:

(I) $S_1$-B-$S_2$;

(II) $B_1$-$S_1$-$B_2$-$S_2$;

in which: $S_1$ and $S_2$ are non-elastomeric polymeric blocks of a vinyl aromatic monomer having different molecular weights; and B, $B_1$ and $B_2$ are elastomeric polymeric blocks based on a conjugated diene, having either the same or different molecular weights.

**6.** Thermoplastic, high impact moulding material according to claim 5, in which the non-elastomeric polymeric blocks ($S_1$) and ($S_2$) have a molecular weight comprised within the range of from 5000 to 250,000 and the elastomeric blocks (B), ($B_1$) and ($B_2$) have a molecular weight comprised within the range of from 2000 to 250,000.

**7.** Thermoplastic, high impact moulding material according to claim 5 or 6, in which between the polymeric blocks $S_1$, $S_2$ and B, $B_1$ and $B_2$ "random" and/or "tapered" sections are present which have a molecular weight comprised within the range of from 500 to 50,000.

**8.** Thermoplastic, high impact moulding material according to any of the preceding claims from 1 to 4, in which the polymodal block polymer ($C_1$) is of radial type and is selected from these having the general fromulas:

(III) $(S_1\text{-}S_2\text{-}B_1)_n$ - X - $(B_1$ - $S_2)_m$;

(IV) $(S_1\text{-}S_2/B_1\text{-}B_2)_m$ - X - $(B_2\text{-}B_1/S_2)_n$;

(V) $(S_1\text{-}S_2\text{-}B_1/S_3\text{-}B_2)_m$ - X - $(B_2\text{-}S_3/B_1\text{-}S_2)_n$;

(VI) $(S_1\text{-}B_1 \text{->} S_2)_n$ - X - $(S_2 \text{<-} B_1)_m$;

(VII) $(S_3\text{-}S_4\text{-}B_2 \text{->} S_5)_n$ - X - $(S_5 \text{<-} B_2\text{-}S_4)_m$;

(VIII) 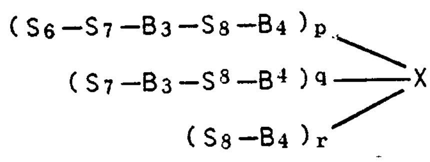

in which:
$S_1$, $S_2$, $S_3$, $S_4$, $S_5$, $S_6$, $S_7$ and $S_8$ are non-elastomeric polymeric blocks from a vinyl aromatic monomer, each of which has a different molecular weight, so that they will yield bimodal, trimodal or, in general, polymodal products; $B_1$, $B_2$, $B_3$ and $B_4$ are polymeric elastomeric blocks based on a conjugated diene, having a molecular weight which may be the same, or different from each other; X is the radical of a polyfunctional coupling agent by means of which the block copolymers which constitute the arms are covalently coupled with one another; m and n are integers, with m being higher than n, and with their sum value, which corresponds to the functionality of the radical X, being larger than 3 and generally comprised within the range of from 3 to 10, and preferably of from 3 to 4; and p, q and r are integers, the sum value of which, which corresponds to the functionality of radical X, is larger than 3, and generally is comprised within the range of from 3 to 10 and preferably of from 3 to 4; and $S_2/B_1$, $B_1/S_2$, $B_1/S_3$ and $S_3/B_1$ are blocks of copolymers of "random" and/or "tapered" types of vinyl aromatic monomer and conjugated diene.

**9.** Thermoplastic, high impact moulding material according to claim 8, in which the non-elastomeric polymeric blocks have a molecular weight comprised within the range of from 5000 to 250,000, the elastomeric polymeric blocks have a molecular weight comprised within the range of from 5000 to 50,000, the blocks of copolymers of "random" and/or "tapered" types have a molecular weight comprised within the range of from 500 to 50,000 and the blocks $B_1 \text{->} S_2$ and $B_2 \text{->} S_5$ preferably have a

molecular weight comprised within the range of from 10,000 to 100,000.

**10.** Thermoplastic, high impact moulding material according to any of the preceding claims, in which the conjugated diene is 1,3-butadiene.

**11.** Thermoplastic, high impact moulding material according to any of the preceding claims, in which the average chord of the particles of dienic rubber in the high impact vinyl aromatic polymer ($C_2$) is comprised within the range of from 1.2 to 15, preferably of from 1.5 to 10 micrometres, as determined by means of electronic transmission microscopy.

**12.** Thermoplastic, high impact moulding material according to any of the preceding claims, in which the amount of dienic rubber incorporated into the high impact vinyl aromatic polymer ($C_2$) is comprised within the range of from 5 to 15%, preferably of from 7 to 12% by weight.

**13.** Thermoplastic, high impact moulding material according to any of the preceding claims, in which said vinyl aromatic monomer is styrene.

**14.** Thermoplastic, high impact moulding material according to any of the preceding claims, containing from 0.1 to 3% by weight, relatively to the total of ($C_1$) and ($C_2$), of a stabilizer agent.

**15.** Thermoplastic, high impact moulding material according to any of the preceding claims, containing from 0.1 to 30% by weight, relatively to the total of ($C_1$) and ($C_2$), of a plasticizer, a lubricant, a flame-retardant, an antistatic agent, a dye, a pigment, a fluxing agent, a foaming agent, and/or other inorganic fillers.

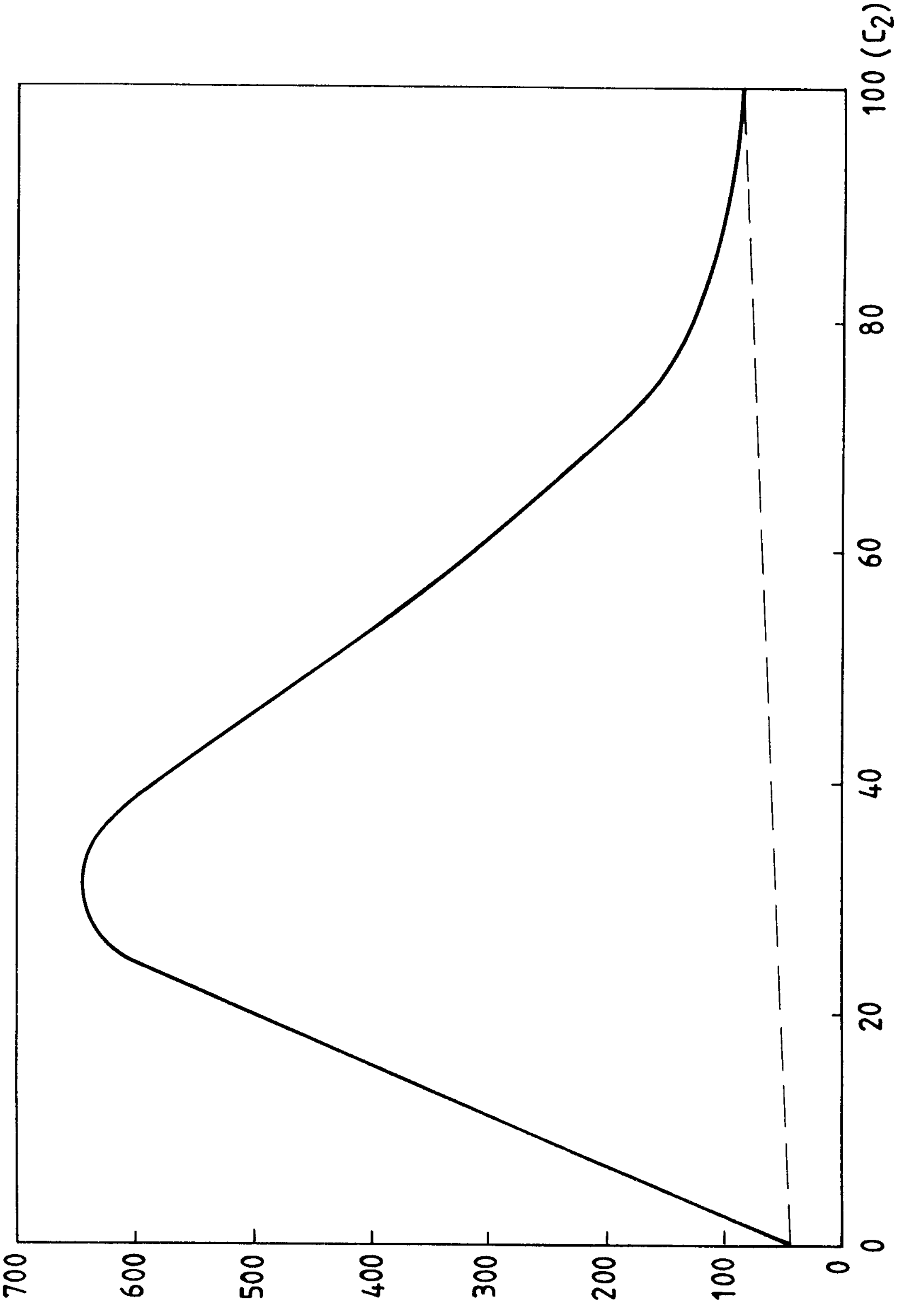

700
600
500
400
300
200
100
0
0
20
40
60
80
100 (C2)

European Patent Office

# EUROPEAN SEARCH REPORT

Application Number
EP 93 20 2274

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | CHEMICAL ABSTRACTS, vol. 110, no. 18, 1 May 1989, Columbus, Ohio, US; abstract no. 155546w, * abstract * & JP-A-63 230 754 (ASAHI CHEMICAL INDUSTRY CO., LTD) 27 September 1988 | 1,2,4, 10-13 | C08L25/02 C08L53/02 //(C08L25/02, 53:02), (C08L53/02, 25:02) |
| X | EP-A-0 048 388 (BASF AKTIENGESELLSCHAFT) * page 5, line 10 - line 15; claims; table * | 1 | |
| A | US-A-4 049 595 (RICHARD J. G. DOMÍNGUEZ) * column 2, line 4 - line 48 * * column 2, line 66 - column 4, line 10; claims; table I * | 1 | |
| D,A | EP-A-0 255 001 (MONTEDIPE S.P.A.) * claims * | 1 | |

TECHNICAL FIELDS SEARCHED (Int.Cl.5)

C08L

The present search report has been drawn up for all claims

| Place of search | Date of completion of the search | Examiner |
|---|---|---|
| THE HAGUE | 4 November 1993 | DE LOS ARCOS, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document